# FASCICULE DE BREVET EUROPEEN

(11) **EP 1 544 636 B1**
(45) Date de publication et mention de la délivrance du brevet: **25.10.2006**
(21) Numéro de dépôt: 04292592.5
(22) Date de dépôt: 02.11.2004
(51) Int. Cl.: G01S 5/14, G01S 1/00, H04Q 7/38

(54) **Dispositif de determination par filtrage de données d'integrité d'un système d'augmentation, pour un terminal mobile**
Vorrichtung zur Bestimmung durch Filtern von Datenintegrität eines differentiellen Positionierungssystems, für ein Mobilgerät
Determination device by filtering of integrity data in a differential positioning system, for a mobile terminal

(30) Priorité: 16.12.2003 FR 0314700
(43) Date de publication de la demande: 22.06.2005
(73) Titulaire: ALCATEL, 75008 Paris (FR)
(72) Inventeur: Derambure, Xavier, 31500 Toulouse (FR); Roghi, Philippe, 31270 Cugnaux (FR)
(74) Mandataire: Hedarchet, Stéphane

(56) Documents cités:
- US-A- 5 504 492
- US-A- 6 134 484
- US-B1- 6 204 806
- US-B2- 6 466 846

## Description

L'invention concerne le domaine du positionnement, et plus précisément les dispositifs de détermination de position autonomes (comme par exemple les récepteurs GPS (pour « Global Positioning System »)) ou embarqués, par exemple dans des terminaux mobiles.

On entend ici par « terminal mobile », un terminal de communication équipé d'un dispositif de détermination de position, éventuellement par satellites, comme par exemple un téléphone mobile, ou un assistant personnel numérique (ou PDA), éventuellement de type communicant.

Comme le sait l'homme de l'art, le positionnement, par exemple par satellites, consiste à enchaîner deux étapes au niveau d'un dispositif de détermination de position (ou dispositif de positionnement).

Dans une première étape, dite d'acquisition, le dispositif détermine des codes pseudo-aléatoires qui modulent des signaux provenant de satellites, dits « en vue », appartenant à une constellation de satellites de positionnement et rapportés à un temps de référence, généralement appelé « temps système ». On entend ici par « constellation de satellites de positionnement », un réseau de positionnement de type RNSS (pour « Radio Navigation Satellite Service »), comme par exemple le réseau GPS, ou le réseau GLONASS, ou encore le futur réseau GALILEO.

Il s'agit en fait de « comparer » les signaux reçus des satellites en vue à des répliques de signaux résultant d'hypothèses sur le temps système et sur la fréquence de cadencement des satellites, afin d'en déduire les codes pseudo-aléatoires qui modulent lesdits signaux reçus ou en d'autres termes de synchroniser l'horloge de cadencement du terminal et sa fréquence sur l'horloge et la fréquence de chaque satellite en vue. Pour ce faire, on effectue habituellement des mesures de corrélation reposant sur des couples d'hypothèses temporelle et fréquentielle.

Puis, dans une seconde étape, le dispositif détermine la position estimée du terminal, dans lequel il est implanté, à partir des codes pseudo-aléatoires acquis et de données de navigation notamment contenues dans les signaux reçus. Plus précisément, cette seconde étape consiste à déterminer à partir des codes pseudo-aléatoires acquis des temps de propagation des signaux entre chacun des satellites en vue et le terminal, puis à déterminer, à partir des données de navigation contenues dans les signaux et des temps de propagation, des pseudo-distances entre le terminal et chacun des satellites en vue, et enfin à déterminer la position estimée du terminal à partir des pseudo-distances.

Cette dernière détermination nécessite au moins une quadrilatération, et plus généralement une résolution numérique de type méthode des moindres carrés à quatre inconnues et au moins quatre mesures (quatre mesures sont alors nécessaires pour résoudre les quatre inconnues). Dans certaines conditions seules trois mesures sont utilisées en fixant une inconnue, typiquement l'altitude (Z) du récepteur, ou bien on peut effectuer des hybridations avec des mesures extérieures.

La précision de chaque temps de propagation, et donc de chaque pseudo-distance, détermine directement la précision de la position estimée. Or, la précision de chaque temps de propagation dépend de la qualité de l'acquisition des codes pseudo-aléatoires du signal reçu correspondant, laquelle est dépendante de la qualité dudit signal reçu.

Par conséquent, lorsque l'un au moins des signaux reçus d'un satellite en vue est de mauvaise qualité, ce qui est relativement fréquent, notamment dans les environnements accidentés ou encombrés, ou encore en bordure d'une zone de couverture satellitaire, la position déterminée est généralement entachée d'erreur. Il peut même arriver que l'on soit momentanément dans l'impossibilité de déterminer la position du terminal, alors même que les signaux provenant des autres satellites en vue sont de bonne qualité.

Afin d'améliorer la situation, et notamment la précision des positions estimées, il a été proposé de coupler les constellations de satellites de positionnement à des systèmes dits « d'augmentation », de type SBAS (pour « Satellite Based Augmentation System »), comme par exemple le système EGNOS.

Un système d'augmentation est généralement constitué de stations terrestres et de satellites géostationnaires (comme par exemple IMMARSAT et ARTEMIS) chargés de transmettre des données d'augmentation aux terminaux mobiles pourvus de dispositifs de positionnement, généralement par voie hertzienne.

Ces données d'augmentation sont généralement représentatives du temps de référence approximatif de la constellation, de la position approximative du terminal concerné et d'au moins un rayon d'incertitude associé à cette position approximative. Mais, elles peuvent être également représentatives d'éphémérides, de données de navigation complémentaires, ou de corrections temporelles, éventuellement représentatives des perturbations induites par l'ionosphère sur la propagation des signaux transmis par les satellites en vue.

Ces données d'augmentation servent essentiellement dans l'étape de détermination de la position estimée et des rayons d'incertitude associés, appelés niveau(x) de protection.

Ces rayons d'incertitude constituent des données d'intégrité qui représentent généralement une enveloppe (Eg définie par un rayon horizontal et un rayon vertical), centrée sur la position approximative associée et dans laquelle est censé se trouver le terminal concerné.

Cette enveloppe, également appelée rayon de protection, est utilisée par le dispositif pour estimer sa disponibilité de service par rapport à une exigence de précision demandée. US B2 6 466 846 divulgue un récepteur GPS différentiel qui utilise données d'assistance comprenant an rayon de confidence qui répresente un cercle centré sur la position approximative du récepteur.

Plus la dimension de l'enveloppe est grande, plus l'imprécision de la position estimée peut être grande. En d'autres termes, ce rayon de protection définit un « niveau de qualité » en terme de précision potentielle de position.

La précision de la position estimée mais aussi du rayon de protection dépendant des informations de corrections et d'intégrité (ou du niveau de qualité) reçues, le dispositif de positionnement est donc tributaire de ce que le système d'augmentation lui transmet.

Or, dans certaines situations il est indispensable de disposer d'une précision supérieure à celle qui est permise par la mise en oeuvre, à un instant donné, du calcul de position selon le standard précité.

En outre, lorsque le terminal se trouve placé dans un environnement radio dégradé ou en bord d'une zone de couverture il peut ne pas recevoir les données d'augmentation (typiquement les corrections et les informations d'intégrité), ce qui dégrade la précision de positionnement (et empêche aussi la détermination du rayon de protection et donc induit une indisponibilité de service).

Certes, des techniques GPS de filtrage de code ont été proposées pour prendre en compte les situations précitées. Mais, elles ne concernent que des terminaux fixes, étant donné que leurs temps de convergence sont trop lents pour permettre leur mise en oeuvre dans des terminaux mobiles.

Par ailleurs, des techniques GPS de filtrage de phase ont également été proposées, mais elles nécessitent non seulement la présence d'une station de référence, dont la position est précisément connue, mais également une visibilité permanente des satellites de la constellation GPS.

L'invention a donc pour but d'améliorer la situation.

Elle propose à cet effet un dispositif de détermination de position pour un terminal mobile, comprenant, d'une part, des moyens d'acquisition de codes pseudo-aléatoires et de données de navigation, contenus dans des signaux reçus, et de données d'augmentation associées, représentatives à chaque instant de la position approximative du terminal et d'un rayon de protection associé, et contenues dans des messages reçus, et d'autre part, des moyens de calcul de position chargés, lorsqu'ils disposent d'un rayon de protection correspondant à un niveau de qualité inférieur à un niveau de qualité choisi, ou bien en l'absence temporairement d'un rayon de protection, associé à une position approximative à un instant T, de déterminer un rayon de protection estimé en fonction d'une loi de pondération appliquée à un nombre choisi de rayons de protection antérieurs, puis de déterminer une position estimée du terminal à l'instant T en fonction au moins du rayon de protection estimé et des codes pseudo-aléatoires, données de navigation et position approximative à l'instant T acquis.

Le dispositif de positionnement peut comporter d'autres caractéristiques qui pourront être prises séparément ou en combinaison, et notamment :
- une mémoire permettant de stocker les rayons de protection antérieurs. Dans ce cas, les moyens de calcul de position sont agencés de manière à comparer chaque niveau de qualité correspondant à un rayon de protection acquis au niveau de qualité choisi, lequel est alors défini, par exemple, par le niveau de qualité correspondant au rayon de protection qui est immédiatement antérieur (instant « T - 1 ») et qui est stocké dans la mémoire. Les moyens de calcul de position peuvent alors être chargés de stocker dans la mémoire soit chaque rayon de protection acquis lorsque son niveau de qualité correspondant est supérieur ou égal au niveau de qualité choisi, de sorte qu'il constitue un rayon de protection antérieur (susceptible d'être utilisé ultérieurement), soit un rayon de protection estimé lorsque le niveau de qualité du rayon de protection acquis associé est inférieur au niveau de qualité choisi, de sorte qu'il constitue un rayon de protection antérieur. Par ailleurs, chaque rayon de protection estimé peut être stocké en correspondance du rayon de protection acquis correspondant,
- les moyens de calcul de position peuvent être reconfigurables de sorte que le nombre de rayon de protection antérieurs qui servent à la détermination d'un rayon de protection estimé puisse être modifié en fonction des besoins,
- les moyens de calcul de position comprennent préférentiellement un moyen de filtrage chargé d'appliquer la loi de pondération aux rayons de protection antérieurs, comme par exemple un filtre linéaire (appliquant une loi de pondération de type linéaire) ou un filtre de Kalman,
- les données de navigation peuvent provenir d'un système de navigation par satellites, par exemple de type GPS, ou GLONASS, ou GALILEO. Dans ce cas, les données d'augmentation peuvent provenir d'un système d'augmentation, par exemple de type EGNOS, couplé au système de navigation par satellites.

L'invention propose également un terminal mobile équipé d'un dispositif de positionnement du type de celui présenté ci-avant. Un tel terminal peut être agencé sous la forme d'un terminal de communication. Par exemple, le terminal peut communiquer au sein d'un réseau de communications cellulaire, dont les cellules sont gérées par une station de base (BTS). Dans ce cas, la position approximative du terminal est représentative de la cellule dans laquelle il est situé à un instant donné.

L'invention est particulièrement bien adaptée, bien que de façon non exclusive, au positionnement par satellites mais aussi à tous les procédés de positionnement utilisant la notion de rayon de protection en tant que donnée(s) d'intégrité.

D'autres caractéristiques et avantages de l'invention apparaîtront à l'examen de la description détaillée ci-après, et des dessins annexés, sur lesquels :
- la figure 1 illustre de façon schématique un exemple de réalisation d'une installation de télécommunications permettant la mise en oeuvre de l'invention, et
- la figure 2 illustre de façon schématique un exemple de réalisation d'un terminal de communication mobile équipé d'un dispositif de positionnement selon l'invention.

Les dessins annexés pourront non seulement servir à compléter l'invention, mais aussi contribuer à sa définition, le cas échéant.

L'invention a pour objet de permettre la détermination de la position estimée d'un terminal mobile au sein d'une installation de télécommunications, avec une précision accrue, notamment dans un environnement dégradé ou en bord de zone de couverture.

On entend ici par « installation de télécommunications », une installation comportant au moins un réseau de communications communiquant avec des terminaux mobiles, un système de positionnement, comme par exemple un réseau de positionnement par satellites, et un système dit « d'augmentation » (ou d'assistance) couplé au système de positionnement et chargé de diffuser des données d'augmentation facilitant le calcul, par des dispositifs de positionnement (ici implantés dans des terminaux mobiles), des positions estimées des terminaux.

Par ailleurs, on entend ici par « terminal mobile » (UE), tout type de terminal capable de recevoir au moins des signaux contenant des données de navigation du réseau de positionnement par satellites et des données d'augmentation du système d'augmentation. Il pourra donc s'agir soit de simples dispositifs de positionnement par satellites portables, ou embarqués dans un véhicule terrestre, maritime ou aérien, et implémentant au moins une application liée au positionnement, soit de téléphones mobiles, d'assistants numériques personnels (ou PDA) ou d'ordinateurs portables, équipés d'un tel dispositif de positionnement par satellites et implémentant également au moins une application liée au positionnement.

En outre, on entend ici par « système de positionnement par satellites », un réseau de positionnement par satellites de type RNSS (pour « Radio Navigation Satellite System »), comme par exemple un réseau GPS. Mais, il pourrait s'agir de tout autre type de réseau RNSS, comme par exemple le réseau GLONASS ou le futur réseau GALILEO, ou bien d'une combinaison d'au moins deux des trois réseaux précités.

Enfin, on entend ici par « système d'augmentation », un système couplé au réseau de positionnement par satellites et chargé de diffuser aux terminaux mobiles (et plus précisément à leurs dispositifs de positionnement) des données d'augmentation (telles que des corrections des erreurs et intégrités des corrections associées). Il s'agit par exemple d'un système de type SBAS (pour « Satellite Based Augmentation System »), comme par exemple le système EGNOS présenté dans la partie introductive. Un tel système comprend généralement des satellites géostationnaires (SG) chargés de diffuser à destination des terminaux mobiles des trames (SBAS) contenant les données d'augmentation et générées par au moins une station au sol (SA). Mais, tout autre type de système d'augmentation peut être envisagé qu'il soit local ou accessible via le réseau Internet.

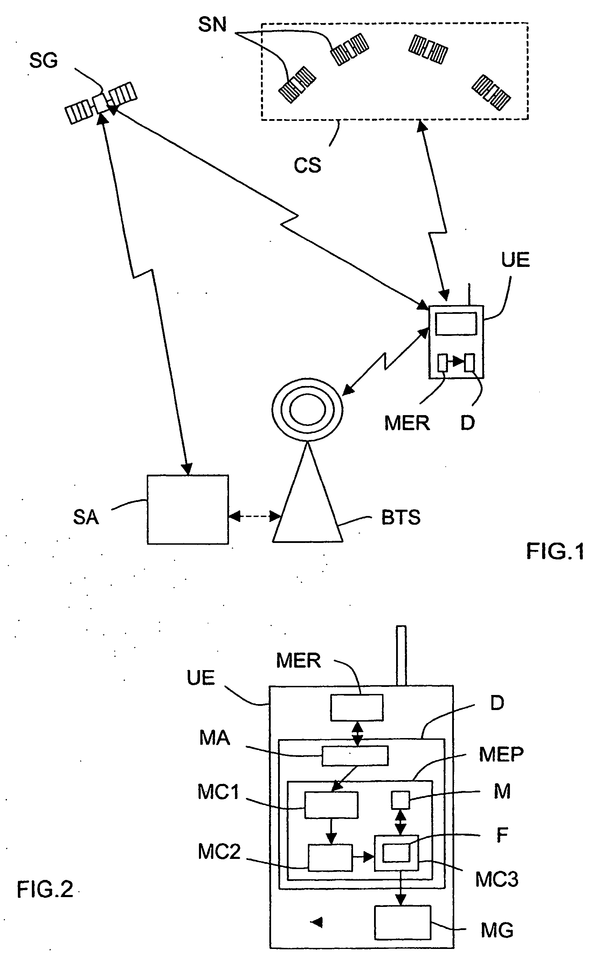

Dans ce qui suit on considère, à titre d'exemple, comme illustré sur la figure 1, que l'installation de télécommunications comporte un réseau de communications (radio) mobile (matérialisé par l'une de ses stations de base BTS), un réseau de positionnement par satellites de type GPS (matérialisé par sa constellation CS de satellites SN), et un système d'augmentation de type EGNOS (matérialisé par un satellite géostationnaire SG et une station d'augmentation au sol SA couplée au réseau de communications). Ce réseau de communications mobile est ici de type cellulaire, comme par exemple les réseaux de type GSM/GPRS et UMTS (et tous leurs équivalents).

Bien entendu, l'installation pourrait être de type hybride, c'est-à-dire comportant une ou plusieurs stations émettrices, un ou plusieurs satellites de télécommunications et des répéteurs terrestres implantés en des endroits choisis du réseau.

On considère par ailleurs dans ce qui suit, à titre d'exemple illustratif, que les terminaux mobiles sont des téléphones mobiles UE pouvant communiquer avec le réseau cellulaire, et notamment avec ses stations de base BTS grâce à un émetteur/récepteur MER, et pouvant communiquer avec le réseau de positionnement par satellites CS et le système d'augmentation (SG, SA) grâce à un dispositif de positionnement par satellites D, ici de type GPS, et ci-après appelé dispositif D.

Bien entendu, lorsque le dispositif D est dédié exclusivement au positionnement et qu'il ne fait pas partie d'un terminal mobile UE, il est pourvu d'un émetteur/récepteur MER.

La configuration de l'installation de télécommunications et son mode de fonctionnement global étant tout à fait classiques, ils ne seront pas décrits plus en détail. L'invention porte en effet sur le mode de fonctionnement du dispositif D. Les fonctionnements respectifs du système de navigation par satellites CS et du système d'augmentation SG et SA, ici de type SBAS, demeurent donc inchangés par rapport à ceux de l'art antérieur.

Il est rappelé que les messages d'augmentation SBAS, qui sont diffusés aux terminaux mobiles UE, contiennent des données de corrections et d'intégrités destinées à corriger les données, notamment de navigation, qui sont fournies par les satellites de positionnement SN de la constellation CS, afin d'améliorer la qualité (précision, intégrité, continuité et disponibilité) du positionnement déterminé par leurs dispositifs D.

Plus précisément, ces données SBAS permettent généralement de corriger des erreurs de synchronisation temporelle entre satellites de navigation SN et/ou des erreurs d'éphémérides et/ou des erreurs de propagation.

Par ailleurs, les données SBAS peuvent également contenir des informations relatives à l'intégrité des données de navigation provenant de la constellation CS, des données de navigation complémentaires, comme par exemple des numéros de PRN en vue, des éphémérides, comme par exemple celles des satellites de positionnement SN en vue du téléphone mobile UE concerné, et des corrections d'horloge, comme par exemple des corrections temporelles représentatives de l'écart temporel entre le temps GPS et l'horloge de cadencement du dispositif D du téléphone mobile UE concerné et/ou représentatives des perturbations induites par l'ionosphère sur la propagation des signaux transmis par les satellites de positionnement SN en vue du téléphone mobile UE concerné.

Il est également rappelé que les satellites de positionnement SN de la constellation CS possèdent des horloges de cadencement qui sont synchronisées entre elles, de sorte que la constellation CS dispose d'un temps de référence, également appelé temps système (ou ici temps GPS).

Par ailleurs, chaque satellite de positionnement SN est agencé de manière à émettre des spectres étalés (ou « spread spectrum ») sous la forme de signaux en bande L modulés en phase et à accès multiple et référencés par rapport au temps GPS. Par exemple, les signaux sont modulés et codés selon la technique dite W-CDMA. Ce type de modulation étant bien connu de l'homme de l'art, il ne sera pas décrit en détail. Il est simplement rappelé que la porteuse en bande L (ou autre) est modulée par étalement de spectre (BPSK) à l'aide d'un code binaire résultant de la somme (modulo 2) d'un code pseudo-aléatoire (choisi parmi une liste de codes d'étalement orthogonaux entre eux, comme par exemple les codes de Gold (ou « Gold codes »).

Dans le cas d'un système GPS, chaque satellite de positionnement SN émet des signaux dans la bande L1 (1575,42 MHz), modulés par deux codes pseudo-aléatoires, appelés codes C/A (ou « coarse acquisition code ») et codes P (également appelé codes Y lorsqu'ils sont encryptés), ainsi que, généralement, des signaux dans la bande L2 (1277,6 MHz) modulés par un code pseudo-aléatoire Y.

Ces signaux modulés contiennent également des données de navigation, comme par exemple le temps GPS de la constellation CS, leur instant d'émission et les éphémérides du satellite de positionnement SN qui les a émis.

Le but d'un dispositif D est donc tout d'abord de se synchroniser sur les signaux qu'il reçoit des satellites de positionnement SN en vue, afin de pouvoir déterminer le temps de propagation de chaque signal reçu, entre le satellite SN concerné et le téléphone mobile UE qu'il équipe, puis les données de navigation contenues dans ces signaux ainsi que les données d'augmentation contenues dans les trames diffusées par le système d'augmentation (SA, SG), et enfin la position estimée dudit téléphone mobile UE.

Pour ce faire, et comme indiqué dans la partie introductive, le dispositif D met en oeuvre une étape d'acquisition des codes pseudo-aléatoires et une étape de détermination de la position estimée. Comme cela est illustré sur la figure 2, le dispositif D comprend un module d'acquisition MA couplé au module d'émission/réception MER et chargé de mettre en oeuvre l'étape d'acquisition, et un module d'estimation de position MEP couplé au module d'acquisition MA et chargé de mettre en oeuvre l'étape de détermination de la position estimée.

L'invention porte principalement sur l'étape de détermination de la position estimée, et donc sur le seul module d'estimation de position MEP. Le module d'acquisition MA est tout à fait classique, et ne fera donc pas l'objet d'une description détaillée.

Le module d'acquisition MA se présente généralement sous la forme d'une carte d'acquisition dédiée à l'analyse des signaux reçus par le module d'émission/réception MER, et plus précisément des signaux (en bande L dans le cas d'un système GPS) provenant de la constellation CS, et des trames SBAS contenant les données d'augmentation provenant du système d'augmentation (SG, SA), en vue de l'acquisition des codes pseudo-aléatoires. Cette carte MA est par exemple calée sur les fréquences d'émission L1 et L2 des satellites de positionnement SN. La fréquence d'émission du satellite géostationnaire SG du système d'augmentation est habituellement L1.

La carte MA constitue des couples d'hypothèses temps/fréquence sur le temps GPS effectif et sa position effective à partir du temps GPS approximatif et de sa position approximative contenus dans les données d'augmentation reçues. Puis, elle détermine pour chaque couple d'hypothèses, d'une part, des positions absolues estimatives des satellites SN de la constellation CS, et d'autre part, les distances estimatives entre le téléphone mobile UE et chacun des satellites de positionnement SN en vue, à partir des positions estimatives de la constellation en vue. Elle détermine également pour chaque couple d'hypothèses, les effets doppler associés à chacun des satellites de positionnement SN en vue, compte tenu de leurs positions approximatives et des distances qui les séparent du téléphone mobile UE.

La carte MA en déduit alors des temps GPS et la position du téléphone mobile UE qui sont les plus probables, ce qui lui permet de se synchroniser sur chaque signal reçu d'un satellite SN en vue afin de déterminer les codes pseudo-aléatoires utilisés pour le moduler. Une fois les codes pseudo-aléatoires déterminés, et donc une fois la synchronisation sur les codes pseudo-aléatoires effectuée, l'étape de détermination de la position estimée peut commencer.

Pour mettre en oeuvre cette seconde étape le module d'estimation de position MEP du dispositif D comporte par exemple trois modules de calcul MC1 à MC3 couplés entre eux.

Le premier module de calcul MC1 est chargé de déterminer pour chaque signal démodulé son temps de propagation entre le satellite SN en vue, qui l'a émis, et le téléphone mobile UE (ou plus précisément son dispositif D). Pour ce faire, il utilise la date d'émission du signal, intégrée dans ledit signal par le satellite qui l'a émis, et la date de réception associée au signal par le module d'émission/réception MER lors de sa réception.

Le deuxième module de calcul MC2 est chargé de déterminer, à partir, d'une part, des données de navigation contenues dans chaque signal et des données de navigation complémentaires contenues dans les messages SBAS reçus du système d'augmentation (SG, SA), et d'autre part, du temps de propagation associé, la pseudo-distance entre le téléphone mobile UE et le satellite SN en vue, correspondant.

Plus précisément, le deuxième module de calcul MC2 utilise les données de navigation complémentaires, et notamment les données de correction, pour corriger les données de navigation transmises dans les signaux en bande L par les satellites SN en vue, avant de les utiliser pour déterminer les pseudo-distances associées à chaque satellite SN en vue.

Ces pseudo-distances alimentent le troisième module de calcul MC3 qui est chargé de déterminer la position estimée du téléphone mobile UE.

Plus précisément, le troisième module de calcul MC3 détermine la position estimée au moins par une quadrilatération, et plus généralement par une résolution numérique de type méthode des moindres carrés à quatre inconnues et au moins quatre mesures, à partir des pseudo-distances (en général au nombre de quatre (4)), de certaines données de navigation corrigées, ainsi que de la position approximative et du rayon de protection associé.

Selon l'invention lorsque le rayon de protection (donnée d'intégrité), associé à une position approximative à un instant T, correspond à un niveau de qualité qui est inférieur à un niveau de qualité choisi, ou bien lorsque le rayon de protection est momentanément indisponible, le troisième module de calcul MC3 détermine un rayon de protection estimé.

Ces situations surviennent généralement dans les environnements accidentés ou encombrés, ou encore en bordure de la zone de couverture du système d'augmentation.

Dans ces situations, le rayon de protection reçu (ou acquis) ne correspond pas aux rayons de protection antérieurs (associés aux instants T-1, T-2, T-3, etc). Il correspond en fait à un niveau de qualité moindre, ou en d'autres termes à une enveloppe d'incertitude de position plus grande. Par exemple, les positions approximatives antérieures étaient associées à des enveloppes de 2 à 3 mètres de rayon, tandis que la position approximative en cours (instant T) est associée à une enveloppe d'un kilomètre de rayon.

En présence d'une telle variation du rayon de protection, il faut beaucoup plus de temps au troisième module de calcul MC3 pour faire converger son calcul vers une position estimée précise. En outre, la précision de la position estimée a une forte probabilité d'être inférieure aux précédentes.

Selon l'invention, le troisième module de calcul MC3 détermine chaque rayon de protection estimé en fonction d'une loi de pondération qui est appliquée à un nombre choisi de rayons de protection antérieurs. En d'autres termes, le troisième module de calcul MC3 extrapole le rayon de protection estimé en fonction d'un ou plusieurs rayons de protection antérieurs. La donnée d'augmentation qu'est le rayon de protection transmis ne sert donc plus seulement en tant que paramètre de correction de la position estimée, mais également de paramètre de filtrage et/ou de paramètre de génération du rayon de protection adapté à la précision requise.

On entend ici par « rayons de protection antérieurs », des rayons de protection précédemment utilisés par le troisième module de calcul MC3 pour déterminer des positions estimées antérieures. Il peut donc s'agir soit de rayons de protection reçus (ou acquis), soit de rayons de protection estimés. Ces rayons de protection antérieurs sont préférentiellement stockés dans une mémoire M à l'initiative du troisième module de calcul MC3. Cette mémoire M peut éventuellement faire partie du troisième module de calcul MC3.

La loi de pondération est préférentiellement appliquée par un filtre F du troisième module de calcul MC3. Tout type de filtrage peut être envisagé. Par exemple, le filtre F peut être un filtre linéaire, appliquant une loi de pondération de type linéaire, ou bien un filtre de Kalman, bien connu de l'homme du métier.

Préférentiellement, le troisième module de calcul MC3 est reconfigurable afin que le nombre de rayons de protection antérieurs, qui servent à la détermination d'un rayon de protection estimé, puisse être modifié en fonction des besoins. Par exemple, l'utilisateur peut choisir dans un menu de son téléphone mobile UE le nombre de rayons de protection antérieurs (ou échantillons) qui doivent être utilisés par le filtre F.

Afin de déterminer si le rayon de protection en cours correspond à un niveau de qualité inférieur au niveau de qualité choisi, le troisième module de calcul MC3 effectue préférentiellement une comparaison.

Le niveau de qualité choisi peut être soit fixé par l'utilisateur, par exemple lors d'une sélection dans un menu de son téléphone mobile UE, soit déterminé par le troisième module de calcul MC3 en fonction, par exemple, du niveau de qualité correspondant au rayon de protection qui est immédiatement antérieur (instant T-1). Dans cette seconde possibilité, le troisième module de calcul MC3 peut par exemple prendre comme niveau de qualité choisi celui qui correspond au rayon de protection antérieur, qui est stocké dans la mémoire M. Celui-ci est en effet soit le rayon de protection reçu (ou acquis), si son niveau de qualité était supérieur au niveau de qualité choisi pour la comparaison, soit le rayon de protection estimé, si le niveau de qualité du rayon de protection reçu était inférieur au niveau de qualité choisi pour la comparaison.

On peut envisager que le troisième module de calcul MC3 stocke dans la mémoire M chaque rayon de protection estimé en correspondance du rayon de protection reçu (ou acquis) correspondant. Cela peut lui permettre de choisir les rayons de protection auxquels il applique la loi de pondération, selon sa configuration.

Une fois que le troisième module de calcul MC3 a effectué sa comparaison, deux cas doivent être envisagés.

Si le niveau de qualité du rayon de protection reçu est supérieur ou égal au niveau de qualité choisi, le troisième module de calcul MC3 utilise préférentiellement le rayon de protection reçu et la position approximative reçue, qui lui est associée, pour procéder, de façon classique et connue de l'homme du métier, à la détermination de la position estimée du téléphone mobile UE.

En revanche, si le niveau de qualité du rayon de protection reçu est inférieur au niveau de qualité choisi, le troisième module de calcul MC3 utilise le rayon de protection estimé et la position approximative reçue, qui lui est associée, pour procéder, de façon classique et connue de l'homme du métier, à la détermination de la position estimée du téléphone mobile UE.

La sortie du troisième module de calcul MC3 alimente en positions estimées le module de gestion MG du téléphone mobile UE.

Le dispositif de positionnement D selon l'invention, et notamment son module d'acquisition et son module d'estimation de position MEP, peuvent être réalisés par exemple sous la forme de circuits électroniques, de modules logiciels (ou informatiques), ou d'une combinaison de circuits et de logiciels.

L'invention est particulièrement bien adaptée aux terminaux mobiles dont les vitesses de déplacement sont typiquement inférieures à environ 70 km/h. En effet, un engin qui se déplace à vitesse élevée est supposé évoluer dans un environnement dégagé, si bien que la précision de sa position peut être faible, tandis qu'un engin qui se déplace à très faible vitesse est supposé évoluer dans un environnement encombré, si bien que la précision de sa position doit être grande (c'est par exemple le cas des navires de grande taille, notamment dans les espaces portuaires ou dans les « rails maritimes » à forte densité de circulation.

Par ailleurs, l'invention permet une détermination de position, avec une précision sensiblement constante, en l'absence de ce que l'homme du métier appelle une « visibilité de phase permanente », et par conséquent elle offre une vitesse de convergence, pour une détermination de position de grande précision, beaucoup plus rapide que celles offertes par les dispositifs de positionnement antérieurs. C'est notamment le cas des applications dans le domaine de la géodésie. En effet, dans ce domaine l'obtention d'une mesure géodésique finale nécessite habituellement une collection de mesures géodésiques intermédiaires pendant environ 24 heures, afin de s'affranchir des valeurs aberrantes par un long moyennage, tandis qu'avec l'invention, on peut réduire très notablement le temps de collection puisque seules les mesures de grandes précisions sont prises en compte dans le moyennage.

En outre, l'invention ne concerne que les dispositifs de positionnement et non les infrastructures réseau, et sa mise en oeuvre est compatible avec les fonctionnements des systèmes de positionnement et d'augmentation actuels.

L'invention ne se limite pas aux modes de réalisation de dispositif de positionnement et de terminal mobile décrits ci-avant, seulement à titre d'exemple, mais elle englobe toutes les variantes que pourra envisager l'homme de l'art dans le cadre des revendications ci-après.

Ainsi, dans ce qui précède il a été décrit une installation dans laquelle le réseau de télécommunications est un réseau cellulaire de type GSM/GPRS ou UMTS. Mais l'invention concerne également les réseaux radio de télécommunications de type satellitaire hybride avec répéteurs terrestres.

## Revendications

1. Dispositif de détermination de position (D) pour un terminal mobile (UE), comprenant des moyens d'acquisition (MA) de codes pseudo-aléatoires et de données de navigation, contenus dans des signaux reçus, et de données d'augmentation associées, représentatives à chaque instant de la position approximative dudit terminal et d'un rayon de protection associé, et contenues dans des messages reçus, **caractérisé en ce qu'**il comprend en outre des moyens de calcul de position (MEP) propres, en présence d'un rayon de protection correspondant à un niveau de qualité inférieur à un niveau de qualité choisi ou en l'absence momentanément d'un rayon de protection, associé à une position approximative à un instant T, à déterminer un rayon de protection estimé en fonction d'une loi de pondération appliquée à un nombre choisi de rayons de protection antérieurs, puis à déterminer une position estimée du terminal (UE) audit instant T en fonction au moins du rayon de protection estimé et des codes pseudo-aléatoires, données de navigation et position approximative à l'instant T acquis.

2. Dispositif selon la revendication 1, **caractérisé en ce qu'**il comprend une mémoire (M) propre à stocker lesdits rayons de protection antérieurs, et **en ce que** lesdits moyens de calcul de position (MEP) sont agencés pour comparer chaque niveau de qualité, correspondant à un rayon de protection acquis, audit niveau de qualité choisi, défini par le niveau de qualité du rayon de protection immédiatement antérieur, stocké dans ladite mémoire (M).

3. Dispositif selon la revendication 2, **caractérisé en ce que** lesdits moyens de calcul de position (MEP) sont agencés pour stocker dans ladite mémoire (M) soit un rayon de protection acquis lorsque son niveau de qualité correspondant est supérieur ou égal audit niveau de qualité choisi, de sorte qu'il constitue un rayon de protection antérieur, soit un rayon de protection estimé lorsque le niveau de qualité du rayon de protection acquis associé est inférieur audit niveau de qualité choisi, de sorte qu'il constitue un rayon de protection antérieur.

4. Dispositif selon l'une des revendications 2 et 3, **caractérisé en ce que** chaque rayon de protection estimé est stocké dans la mémoire (M) en correspondance du rayon de protection acquis correspondant.

5. Dispositif selon l'une des revendications 1 à 4, **caractérisé en ce que** lesdits moyens de calcul de position (MEP) sont agencés pour modifier sur ordre le nombre de rayons de protection antérieurs, servant à ladite détermination d'un rayon de protection estimé.

6. Dispositif selon l'une des revendications 1 à 5, **caractérisé en ce que** lesdits moyens de calcul de position (MEP) comprennent un moyen de filtrage (F) propre à appliquer ladite loi de pondération auxdits rayons de protection antérieurs.

7. Dispositif selon la revendication 6, **caractérisé en ce que** ledit moyen de filtrage (F) est un filtre linéaire propre à appliquer une loi de pondération de type linéaire.

8. Dispositif selon la revendication 6, **caractérisé en ce que** ledit moyen de filtrage (F) est un filtre de Kalman.

9. Dispositif selon l'une des revendications 1 à 8, **caractérisé en ce que** lesdites données de navigation proviennent d'un système de navigation par satellites (CS, SN).

10. Dispositif selon la revendication 9, **caractérisé en ce que** lesdites données d'augmentation proviennent d'un système d'augmentation (SG, SA) couplé audit système de navigation par satellites (CS).

11. Terminal mobile (UE), **caractérisé en ce qu'**il comprend un dispositif de détermination de position (D) selon l'une des revendications précédentes.

12. Terminal selon la revendication 11, **caractérisé en ce qu'**il est agencé sous la forme d'un terminal de communication.

13. Terminal selon la revendication 12, **caractérisé en ce qu'**il est agencé pour communiquer au sein d'un réseau de communications cellulaire dont chaque cellule est gérée par une station de base (BTS), et **en ce que** ladite position approximative est représentative de la cellule dans laquelle il est situé.

## Claims

1. Position determination device (D) for a mobile terminal (UE), said device comprising means (MA) for acquiring pseudorandom codes and navigation data contained in received signals and associated augmentation data representative of an instantaneous approximate position of said terminal and an associated radius of protection and contained in received messages, **characterised in that** it also comprises position calculation means (MEP) adapted, in the presence of a radius of protection corresponding to a quality level lower than a chosen quality level or in the momentary absence of a radius of protection, associated with an approximate position at a time T, to determine an estimated radius of protection as a function of a weighting law applied to a chosen number of earlier radii of protection and then to determine an estimated position of the terminal (UE) at said time T as a function of at least the estimated radius of protection and the pseudorandom codes, navigation data and approximate position acquired at the time T.

2. Device according to claim 1, **characterised in that** it further comprises a memory (M) adapted to store said earlier radii of protection and **in that** said position calculation means (MEP) are adapted to compare each quality level corresponding to an acquired radius of protection to said chosen quality level defined by the quality level of the immediately preceding radius of protection stored in said memory (M).

3. Device according to claim 2, **characterised in that** said position calculation means (MEP) are adapted to store in said memory (M) either an acquired radius of protection if the corresponding quality level is greater than or equal to said chosen quality level so that it constitutes an earlier radius of protection or an estimated radius of protection if said quality level of the associated acquired radius of protection is lower than said chosen quality level so that it constitutes an earlier radius of protection.

4. Device according to either of claims 2 and 3, **characterised in that** each estimated radius of protection is stored in the memory (M) in corresponding relationship to the corresponding acquired radius of protection.

5. Device according to any of claims 1 to 4, **characterised in that** said position calculation means (MEP) are adapted to modify on command the number of earlier radii of protection used to determine an estimated radius of protection.

6. Device according to any of claims 1 to 5, **characterised in that** said position calculation means (MEP) comprise filtering means (F) adapted to apply said weighting law to said earlier radii of protection.

7. Device according to claim 6, **characterised in that** said filtering means (F) constitute a linear filter adapted to apply a linear weighting law.

8. Device according to claim 6, **characterised in that** said filtering means (F) constitute a Kalman filter.

9. Device according to any of claims 1 to 8, **characterised in that** said navigation data comes from a satellite navigation system (CS, SN).

10. Device according to claim 9, **characterised in that** said augmentation data comes from an augmentation system (SG, SA) coupled to said satellite navigation system (CS).

11. Mobile terminal (UE) **characterised in that** it comprises a position determination device (D) according to any preceding claims.

12. Terminal according to claim 11, **characterised in that** it constitutes a communication terminal.

13. Terminal according to claim 12, **characterised in that** it is adapted to communicate within a cellular communications network in which each cell is managed by a base transceiver station (BTS) and **in that** said approximate position is representative of the cell in which it is located.

## Patentansprüche

1. Vorrichtung zur Positionsbestimmung (D) für ein Mobilgerät (UE), die zum einen Mittel enthält zur Erfassung (MA) pseudostochastischer Codes und von Navigationsdaten, die in empfangenen Signalen enthalten sind, und von zugehörigen differentiellen Positionierungsdaten, die zu jedem Zeitpunkt typisch sind für die annähernde Position dieses Endgeräts und eines zugehörigen Schutzradius, enthalten in den empfangenen Meldungen, **dadurch gekennzeichnet, dass** sie außerdem Mittel zur Positionsberechnung (MEP) enthält, die geeignet sind, bei Vorliegen eines Schutzradius, der einem Qualitätsniveau entspricht, das niedriger ist als ein gewähltes Qualitätsniveau, oder bei zeitweiligem Fehlen eines Schutzradius verbunden mit einer annähernden Position zu einem Zeitpunkt T, einen geschätzten Schutzradius zu bestimmen in Abhängigkeit von einem Gewichtungsgesetz, das auf eine gewählte Anzahl von früheren Schutzradien angewandt wird, dann eine geschätzte Position des Endgeräts (UE) zu diesem Zeitpunkt T in Abhängigkeit mindestens von dem geschätzten Schutzradius und den pseudostochastischen Codes, Navigationsdaten und annähernder Position zum erfassten Zeitpunkt T zu bestimmen.

2. Vorrichtung gemäß Anspruch 1, **dadurch gekennzeichnet, dass** sie einen Speicher (M) enthält, der geeignet ist, diese früheren Schutzradien zu speichern, und **dadurch gekennzeichnet, dass** diese Mittel zur Positionsberechnung (MEP) so angeordnet sind, dass sie jedes Qualitätsniveau, das einem erfassten Schutzradius entspricht, mit diesem gewählten Qualitätsniveau vergleichen, welches festgelegt wird durch das Qualitätsniveau des unmittelbar davor liegenden Schutzradius, der in diesem Speicher (M) gespeichert ist.

3. Vorrichtung gemäß Anspruch 2, **dadurch gekennzeichnet, dass** diese Mittel zur Positionsberechnung (MEP) angeordnet sind, um in diesem Speicher (M) entweder einen erfassten Schutzradius zu speichern, wenn dessen entsprechendes Qualitätsniveau größer oder gleich diesem gewählten Qualitätsniveau ist, so dass er einen früheren Schutzradius bildet, oder einen geschätzten Schutzradius, wenn das Qualitätsniveau des zugehörigen erfassten Schutzradius unter dem gewählten Qualitätsniveau liegt, so dass er einen früheren Schutzradius bildet.

4. Vorrichtung gemäß einem der Ansprüche 2 und 3, **dadurch gekennzeichnet, dass** jeder geschätzte Schutzradius im Speicher (M) in Übereinstimmung mit dem entsprechenden erfassten Schutzradius gespeichert wird.

5. Vorrichtung gemäß einem der Ansprüche 1 bis 4, **dadurch gekennzeichnet, dass** diese Mittel zur Positionsberechnung (MEP) angeordnet sind, um auf Befehl die Anzahl der früheren Schutzradien, die für diese Bestimmung eines geschätzten Schutzradius dienen, abzuändern.

6. Vorrichtung gemäß einem der Ansprüche 1 bis 5, **dadurch gekennzeichnet, dass** diese Mittel zur Positionsberechnung (MEP) ein Mittel zur Filterung (F) enthalten, das geeignet ist, dieses Gewichtungsgesetz auf diese früheren Schutzradien anzuwenden.

7. Vorrichtung gemäß Anspruch 6, **dadurch gekennzeichnet, dass** dieses Mittel zur Filterung (F) ein lineares Filter ist, das geeignet ist, ein lineares Gewichtungsgesetz anzuwenden.

8. Vorrichtung gemäß Anspruch 6, **dadurch gekennzeichnet, dass** dieses Mittel zur Filterung (F) ein Kalmanfilter ist.

9. Vorrichtung gemäß einem der Ansprüche 1 bis 8, **dadurch gekennzeichnet, dass** diese Navigationsdaten von einem Navigationssystem per Satelliten (CS, SN) herkommen.

10. Vorrichtung gemäß Anspruch 9, **dadurch gekennzeichnet, dass** diese differentiellen Positionierungsdaten von einem differentiellen Positionierungssystem (SG, SA) herkommen, das an dieses Navigationssystem per Satelliten (CS) gekoppelt ist.

11. Mobilgerät (UE), **dadurch gekennzeichnet, dass** es eine Vorrichtung zur Positionsbestimmung (D) gemäß einem der vorstehenden Ansprüche enthält.

12. Endgerät gemäß Anspruch 11, **dadurch gekennzeichnet, dass** es in Form eines Kommunikationsterminals gestaltet ist.

13. Endgerät gemäß Anspruch 12, **dadurch gekennzeichnet, dass** es gestaltet ist, um in einem zellularen Kommunikationsnetz zu kommunizieren, bei dem jede Zelle durch eine Basisstation (BTS) verwaltet wird, und **dadurch gekennzeichnet, dass** diese annähernde Position typisch ist für die Zelle, in der es sich befindet.
